# EUROPEAN PATENT SPECIFICATION

(11) **EP 2 565 460 B1**
(45) Date of publication and mention of the grant of the patent: **26.06.2019**
(21) Application number: 11774605.7
(22) Date of filing: 22.04.2011
(51) Int. Cl.: F04C 29/12, C09K 5/04, F01C 21/10, F04C 23/00, F04C 25/00, F04C 18/356

(54) **ROTARY COMPRESSOR**
ROTATIONSVERDICHTER
COMPRESSEUR ROTATIF

(30) Priority: 28.04.2010 JP 2010103291
(43) Date of publication of application: 06.03.2013
(73) Proprietor: Panasonic Corporation, Kadoma-shi Osaka 571-8501 (JP)
(72) Inventor: OYAGI, Shingo, Osaka 540-6207 (JP); YOSHIDA, Hirofumi, Osaka 540-6207 (JP); KARINO, Tsuyoshi, Osaka 540-6207 (JP); OHNO, Ryuichi, Osaka 540-6207 (JP); NAKAI, Hiroaki, Osaka 540-6207 (JP); IIDA, Noboru, Osaka 540-6207 (JP)
(74) Representative: Eisenführ Speiser
(86) International application number: PCT/JP2011/002371
(87) International publication number: WO 2011/135817

(56) References cited:
- WO-A1-2009/136565
- WO-A1-2009/157320
- JP-A- 3 217 686
- JP-A- 2009 167 828
- JP-A- 2009 174 522
- JP-A- 2009 300 021
- JP-A- 2009 300 022

## Description

### Technical Field

The present invention relates to a rotary compressor that can be incorporated into refrigerating cycles such as, for example, room-air conditioners, refrigerators or other air conditioners in which a refrigerant containing no chlorine atoms, having a small global warming potential and also having, as a main component, hydrofluoroolefin having a carbon-carbon double bond is employed as a refrigerant.

### Background Art

Conventional refrigerating appliances generally employ an HFC (hydrofluorocarbon) refrigerant having a zero-ozone depletion potential as a refrigerant, but in recent years the use of the HFC refrigerant becomes a problem because it has a large global warming potential. In view of this, an improved refrigerating appliance has been proposed that employs a refrigerant containing no chlorine atoms, having a small global warming potential and also having, as a main component, hydrofluoroolefin having a carbon-carbon double bond.

In the refrigerating appliance, a rotary compressor is used to inhale a gas refrigerant from an evaporator and compress the gas refrigerant to a pressure required for condensation, before a high-temperature and high-pressure gas refrigerant is introduced into a refrigerant circuit. Because most of power of the refrigerating appliance is used by the compressor, the performance of the refrigerating appliance depends greatly on that of the compressor. A conventional rotary compressor employing an HFC refrigerant is optimized in shape design to use HFC410A that is a typical refrigerant, thereby enhancing the performance.

Rotary compressors are known in patent documents (see, for example, Patent Document 1). A rotary compressor as shown in, for example, Fig. 10 includes an electric motor 101, a compression mechanism 102 connected to the electric motor 101 via a shaft 103, and a closed container 100 for accommodating the electric motor 101 and the compression mechanism 102 therein. The electric motor 101 is made up of a rotor 104 and a stator 105, and balance weights 106 are provided on top of and on bottom of the rotor 104 to reduce vertical vibration and noise. The rotor 104 is connected to the compression mechanism 102 by the shaft 103 and electrically rotated to drive the compression mechanism 102.

The compression mechanism 102 includes a cylinder 107, an upper end plate 108 and a lower end plate 109 for closing opposite ends of the cylinder 107 to define a compression chamber 110, and a roller 111 accommodated within the compression chamber 110 and mounted on an eccentric portion of the shaft 103, which is supported by the upper end plate 108 and the lower end plate 109. The compression mechanism 102 also includes a vane 112 held in contact with an outer peripheral surface of the roller 111. The vane 112 follows eccentric rotation of the roller 111 for reciprocating motion thereof and partitions the compression chamber 110 into a low-pressure portion and a high-pressure portion. The cylinder 107 has a suction port 114 defined therein, through which a refrigerant is inhaled into the low-pressure portion of the compression chamber 110, and the upper end plate 108 has a discharge port (not shown) defined therein, through which the refrigerant is discharged from the high-pressure portion created upon transformation of the low-pressure portion. The roller 111 is accommodated within the compression chamber 110 that is formed by closing the cylinder 107 from above and from below with the upper end plate 108 and the lower end plate 109. A discharge valve (not shown) is mounted on the discharge port (not shown) to open the discharge port when a pressure greater than a predetermined value is applied thereto. A discharge muffler 117 is provided so as to cover the discharge valve. In the rotary compressor of the above-described construction, on the low pressure side, a sliding contact portion of the roller 111 passes through the suction port 114 and then moves away therefrom while gradually enlarging a suction chamber, thereby drawing the refrigerant into the suction chamber through the suction port 114. On the other hand, on the high pressure side, the sliding contact portion of the roller 111 approaches the discharge port (not shown) while gradually reducing the compression chamber 110, and when the refrigerant is compressed over the predetermined pressure, the discharge valve (not shown) is opened to discharge the refrigerant through the discharge port (not shown).

In this event, if the discharge port (not shown) is too small, an excessive compression in which the pressure increases excessively over the predetermined pressure occurs, which in turn causes a loss. In contrast, if the discharge port (not shown) is too large, the refrigerant remaining in the discharge port (not shown) increases, flows into the low-pressure portion of the compression chamber 110, and then expands again, thus resulting in loss generation.

A design of such a pressure-loss generating portion for causing loss generation is important in terms of an increase in compressor performance and, hence, the pressure-loss generating portion is optimized in shape and size when using HFC410A that has been hitherto used as a typical HFC refrigerant. Patent Document 2 forming the closest prior art from which the present invention starts, discloses a compressor for compressing a refrigerant wherein the compressor is employed in a refrigeration cycle and wherein HFO1234yf is used as a refrigerant. The sectional area of a channel in a main pressure loss generating section is enlarged to be 1.05 to 1.40 times the sectional area of the channel where HFC134a is used as a refrigerant.
Moreover, Patent Document 3 describes a refrigerating cycle device which has a refrigerant circuit in which a compressor, a condenser, a pressure reducing device and an evaporator are interconnected. The refrigerating cycle device is provided with a first gas-liquid separator connected in the middle of a refrigerant pass of the condenser and dividing the condenser into a first condenser and a second condenser. The first gas-liquid separator separates a refrigerant made to flow out from the first condenser into a liquid refrigerant and a gas refrigerant, bypasses the separated liquid refrigerant to the outlet side of the second condenser and supplies separated gas refrigerant to the second condenser. The number of refrigerant branches of the second condenser is that smaller than that of the first condenser.

### Patent Document(s)

Patent Document 1: JP 2004-92516 A
Patent Document 2: WO 2009/136565
Patent Document 3: JP 2009-300021

### Summary of the Invention

### Problems to be solved by the Invention

However, a refrigerant containing no chlorine atoms, having a small global warming potential and also having, as a main component, hydrofluoroolefin having a carbon-carbon double bond has a density lower than that of HFC410A, i.e., a conventionally-used typical HFC refrigerant. Because of this, if a compressor of a conventional shape is used, it is necessary to increase a volume of the refrigerant, thus resulting in an increase in flow rate and an increase in pressure loss. Also, because the refrigerant containing no chlorine atoms and having, as a main component, hydrofluoroolefin having a carbon-carbon double bond is likely to decompose at high temperatures, it is necessary to appropriately restrain an increase in discharge temperature that may be caused by an excessive compression and subsequent re-expansion of the refrigerant.

The present invention has been developed to overcome the above-described disadvantages. It is accordingly an objective of the present invention to provide a highly-efficient rotary compressor that can assuredly reduce a pressure loss and is superior in reliability and durability.

### Means to Solve the Problems

In accomplishing the above objective, the rotary compressor according to the present invention is defined by claim 1 attached. In particular, a total opening area of discharge ports is determined depending on a density of a refrigerant.

By doing so, a pressure loss can be assuredly reduced, thus making it possible to provide a highly-efficient rotary compressor that is superior in reliability and durability.

In a preferred embodiment, a rotary compressor according to the present invention is provided, wherein the mixture refrigerant comprises tetrafluoropropene (HFO1234yf) as the hydrofluoroolefin and difluoromethane (HFC32) as the hydrofluorocarbon, and 60% of the tetrafluoropropene 10 (HFO1234yf) is mixed with 40% of the difluoromethane (HFC32), and wherein the total opening area of the discharge port is 1.01 to 1.2 times greater than when R410A is used as the refrigerant.

### Effects of the Invention

The rotary compressor according to the present invention has discharge ports suited for the density of the refrigerant. This feature can restrain a reduction in reliability or durability, which has been hitherto caused by decomposition of the refrigerant, and ensure an appropriate opening area of the discharge port. Accordingly, the pressure loss can be positively reduced, thus resulting in a highly-reliable and highly-efficient rotary compressor.

### Brief Description of the Drawings

Fig. 1 is a vertical sectional view of a rotary compressor.
Fig. 2 is a top plan view of an upper end plate in the compressor according to Fig. 1.
Fig. 3 is a graph indicating densities of inhaled refrigerants under the condition in which a condensation temperature and a saturation temperature thereof are the same as those of HFC410A in a certain operating range of the compressor.
Fig. 4 is a characteristic table indicating global warming potentials (GWPs) of two-component mixture refrigerants comprising tetrafluoropropene and difluoromethane at varying mixture ratios.
Fig. 5 is a sectional view of a compression mechanism according to a first embodiment of the present invention.
Fig. 6 is an enlarged view of a discharge port and its surroundings according to a second embodiment of the present invention.
Fig. 7 is a perspective view of a cylinder according to a third embodiment of the present invention.
Fig. 8A is an enlarged view of a discharge port and its surroundings according to a fourth embodiment of the present invention as viewed from the left side.
Fig. 8B is an enlarged view of the discharge port and its surroundings according to the fourth embodiment of the present invention as viewed from the right side.
Fig. 9 is a top plan view of an upper end plate and discharge ports according to a fifth embodiment of the present invention.

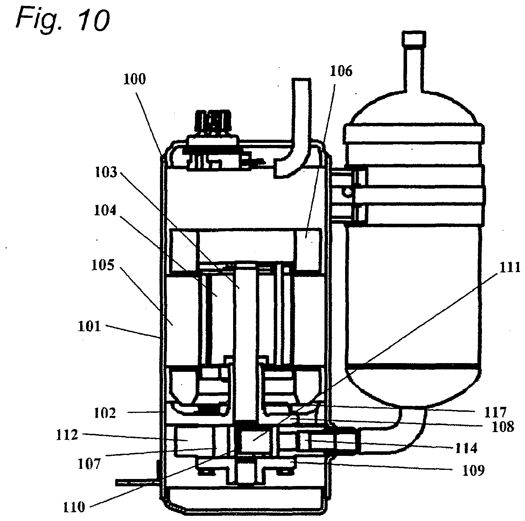

Fig. 10 is a sectional view of a conventional rotary compressor.

### Embodiments for Carrying out the Invention

The invention as defined in claim 1 enclosed, is directed to a rotary compressor containing, as a refrigerant, a single-component refrigerant comprising hydrofluoroolefin having a carbon-carbon double bond or a mixture refrigerant comprising the hydrofluoroolefin having a carbon-carbon double bond and hydrofluorocarbon having no double bond The rotary compressor includes a compression mechanism having a compression chamber for inhaling the refrigerant to increase a pressure thereof and a discharge port for discharging the refrigerant, the pressure of which has been increased in the compression chamber. A discharge valve is incorporated in the compression mechanism and has a distal end portion to cover the discharge port. A total opening area of the discharge port is determined depending on a density of the refrigerant, thereby making it possible to provide a rotary compressor capable of positively reducing a pressure loss associated with an increase in flow rate of the refrigerant, preventing a rise in discharge temperature that may be caused by an excessive compression, and restraining a reduction in reliability or durability that may be caused by decomposition of the refrigerant.

Moreover, the compression mechanism comprises a suction port for inhaling the refrigerant and includes a cylinder having an internal space that communicates with the suction port to compress the refrigerant inhaled through the suction port. The compression mechanism also includes an upper end plate and a lower end plate for closing opposite ends of the cylinder to define the compression chamber, wherein the discharge port is formed in each of the upper end plate and the lower end plate. This feature can facilitate machining and assembling.

Although the provision of only one discharge port increases the total opening area and also increases a dead volume, the separate provision of the discharge ports in the upper and lower end plates can reduce an opening area of each discharge port, thus making it possible to reduce the dead volume and secure the total opening area of the discharge ports. Also, because the refrigerant can be discharged through the upper and lower end plates at the same angle of rotation of a crankshaft, the dead volume can be further reduced, thus resulting in a further increase in reliability and efficiency.

The term "dead volume" used herein means a space that communicates with the compression chamber, but may cause the refrigerant to remain therein or cause a countercurrent flow of the refrigerant to reduce a compressor efficiency.

Furthermore, a ridge can be formed around the discharge port or on the discharge valve to bring the discharge valve into line contact with the discharge port. The line contact increases a sealing performance of the discharge valve with respect to the discharge port and accordingly reduces leakage of the refrigerant, thus making it possible to provide a highly-reliable and highly-efficient rotary compressor.

Additionally, the discharge valve can have a convex portion accommodated within the discharge port, thereby making it possible to reduce the dead volume in the discharge port and provide a highly-efficient rotary compressor.

Moreover, the cylinder can have a cutout defined therein so as to have a shape corresponding to a sectional shape of the discharge port on a contact surface with the discharge port, the cutout having a sectional shape that gradually reduces in an opposite direction from the contact face with the discharge port. By doing so, a pressure loss when the refrigerant flows from the compression chamber to the discharge port is reduced and, at the same time, an excessive compression is restrained, thus making it possible to provide a highly-reliable and highly-efficient rotary compressor.

Furthermore, the discharge port can be formed into a cylindrical form, thereby making it possible to provide a highly-reliable and highly-efficient rotary compressor that can facilitate machining and reduce the pressure loss in the discharge port.

Also, the discharge port can be formed into a tapered form, thereby making it possible to reduce the dead volume in the discharge port and provide a further highly-efficient rotary compressor.

Additionally, a plurality of discharge ports can be provided. The provision of the plurality of discharge ports increases the degree of freedom in design and also increases the reliability and efficiency.

Moreover, the total opening area of the discharge port can be 1.01 to 1.70 times greater than when R410A is used as the refrigerant, thus making it possible to assuredly provide a highly-reliable and highly-efficient rotary compressor.

Furthermore, a single-component refrigerant can comprise tetrafluoropropene or trifluoropropene as the hydrofluoroolefin and the mixture refrigerant is a two- or three-component mixture refrigerant comprising tetrafluoropropene or trifluoropropene as the hydrofluoroolefin as a main component, so as to make global warming potential greater than or equal to 5 and less than or equal to 750, preferably less than or equal to 350. This feature can reduce an environmental load and provide a highly-reliable and highly-efficient rotary compressor.

Additionally, a mixture refrigerant can be a two- or three-component mixture refrigerant comprising tetrafluoropropene or trifluoropropene as the hydrofluoroolefin as a main component, and difluoromethane and pentafluoroethane so as to make global warming potential greater than or equal to 5 and less than or equal to 750, preferably less than or equal to 350. This feature can reduce an environmental load, restrain a flow rate, and reduce a discharge temperature, thus making it possible to provide a highly-reliable and highly-efficient rotary compressor.

Also, a refrigerant oil can be a synthetic oil comprising an oxygenated compound as a main component which includes one of polyoxyalkylene glycols, polyvinyl ethers, copolymers of poly(oxy)alkylene glycol or mono ether thereof and polyvinyl ether, polyol esthers, and polycarbonates or a synthetic oil comprising one of alkyl benzenes and alpha olefins as a main component. Accordingly, a highly-reliable and highly-efficient rotary compressor can be provided.

Moreover, a mixture refrigerant comprises tetrafluoropropene (HFO1234yf) as a hydrofluoroolefin and difluoromethane (HFC32) as the hydrofluorocarbon, and 80% of the tetrafluoropropene (HFO1234yf) is mixed with 20% of the difluoromethane (HFC32), wherein the total opening area of the discharge port is 1.01 to 1.4 times greater than when R410A is used as the refrigerant. This feature can satisfy a GWP of 150 or less, reduce an environmental load, and provide a highly-reliable and highly-efficient rotary compressor.

Embodiments of the present invention are described hereinafter with reference to the drawings, but the present invention is not limited to the embodiments.

### (Embodiment 1)

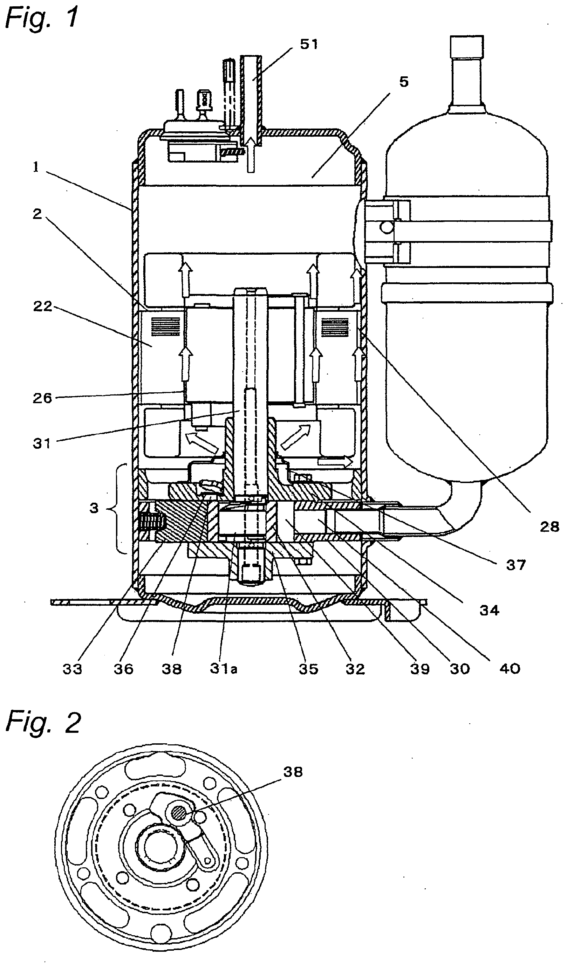

Fig. 1 is a vertical sectional view of a hermetic compressor.

As shown in Fig. 1, the rotary compressor includes an electric motor 2, a compression mechanism 3 connected to the electric motor 2 via a crankshaft 31, and a closed container 1 for accommodating the electric motor 2 and the compression mechanism 3 therein. The compression mechanism 3 includes a cylinder 30, an upper end plate 34 and a lower end plate 35 for closing opposite ends of the cylinder 30 to define a compression chamber 39, and a roller 32 accommodated within the compression chamber 39 and mounted on an eccentric portion 31a of the crankshaft 31, which is supported by the upper end plate 34 and the lower end plate 35. The compression mechanism 3 also includes a vane 33 held in contact with an outer peripheral surface of the roller 32. The vane 33 follows eccentric rotation of the roller 32 for reciprocating motion thereof and partitions the compression chamber 39 into a low-pressure portion and a high-pressure portion.

The cylinder 30 has a suction port 40 defined therein, through which a gas is inhaled into the low-pressure portion of the compression chamber 39, and the upper end plate 34 has a discharge port 38 defined therein, through which the gas is discharged from the high-pressure portion created upon transformation of the low-pressure portion. The roller 32 is accommodated within the compression chamber 39 that is formed by closing the cylinder 30 from above and from below with the upper end plate 34 and the lower end plate 35. The discharge port 38 is a hole extending through the upper end plate 34 and a discharge valve 36 is mounted on the discharge port 38 to open the discharge port 38 when a pressure greater than a predetermined value is applied thereto. A cup-shaped muffler 37 is provided so as to cover the discharge valve 36.

On the low pressure side, a sliding contact portion of the roller 32 passes through the suction port 40 and then moves away therefrom while gradually enlarging a suction chamber, thereby drawing the gas into the suction chamber through the suction port 40. On the other hand, on the high pressure side, the sliding contact portion of the roller 32 approaches the discharge port 38 while gradually reducing the compression chamber 39, and when the gas is compressed over the predetermined pressure, the discharge valve 36 is opened to discharge the gas into the closed container 1 through the discharge port 38 and the cup-shaped muffler 37. The gas so discharged passes through grooves 28 formed between a stator 22 and a side wall of the closed container land through an air gap 26 defined in the electric motor 2. The gas is then introduced into a space inside an upper shell 5 disposed above the electric motor 2 and finally discharged out of the closed container 1 through a refrigerant discharge pipe 51. Arrows indicate a flow of refrigerant.

Operation and function of the rotary compressor of the above-described construction are explained hereinafter.

In this embodiment, a refrigerant mainly comprising hydrofluoroolefin having a carbon-carbon double bond is used alone or in combination with another refrigerant as a refrigerant.

Fig. 2 is a top plan view of the upper end plate 34 and the discharge port 38 according to the present invention. In Fig. 2, diagonal lines indicate an opening area of the discharge port 38. This opening area is determined in the light of the fact that a density of the refrigerant employed in the present invention differs from that of a refrigerant employed in generally-used compressors.

It is supposed that the density of the refrigerant employed in the generally-used compressors is A and that of the refrigerant employed in the present invention is B. If the density of a suction gas under the same condition is such that B is less than A, a ratio of a flow rate of the refrigerant employed in the present invention to that of the generally-used refrigerant is about A/B. Accordingly, if the discharge port 38 has the same opening area as a conventional one, a loss occurs in the discharge port 38 due to an excessive flow rate. Also, because the refrigerant flow becomes worse in the discharge port 38, an excessive compression occurs. For this reason, the refrigerant increases in temperature and experiences progression of decomposition at high temperatures, which is a problem peculiar to the refrigerant of this kind. Accordingly, the use of the conventional discharge port promotes decomposition of the refrigerant used in the present invention.

The opening area of the discharge port 38 for use with the refrigerant as employed in the present invention is changed from that of a discharge port defined in a rotary compressor that has been designed to employ a conventional refrigerant depending on a density ratio of the refrigerants. By doing so, even when using the refrigerant according to the present invention, not only can the loss be reduced, but decomposition of the refrigerant can be also restrained, thus making it possible to provide a highly-efficient and highly-reliable rotary compressor.

Naturally, same effects can be obtained by forming a similar discharge port 38 in a component part of the compression chamber 39 such as, for example, the lower end plate 35 or the cylinder 30.

A specific example of determining the opening area is next explained.

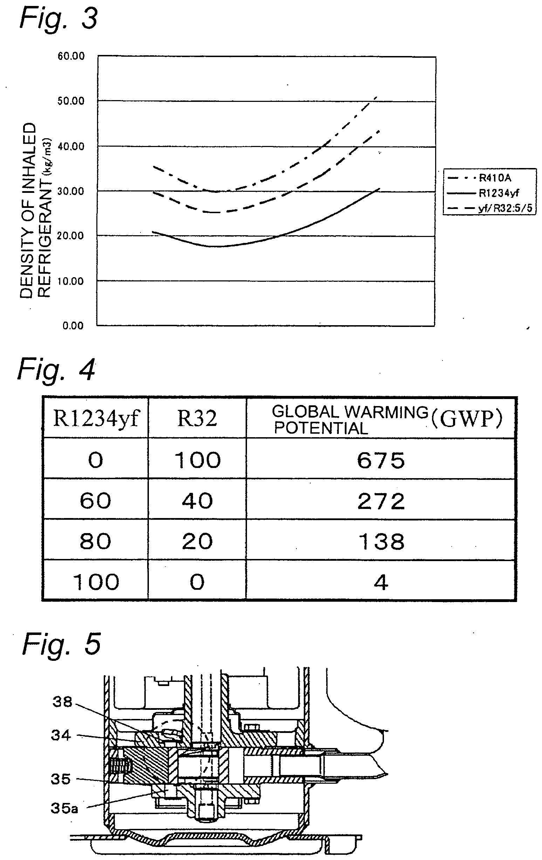

Fig. 3 is a graph indicating densities of inhaled refrigerants under the condition in which a condensation temperature and a saturation temperature thereof are the same as those of HFC410A in a certain operating range of the compressor according to the first embodiment. A dotted line in Fig. 3 indicates a density of an inhaled refrigerant when HFO1234yf and HFC32 were mixed at a mixture ratio of 5:5. Even when HFO1234yf and HFC32 are mixed at a varying ratio, the density of the inhaled refrigerant can be calculated.

As shown in Fig. 3, a density ratio of inhaled gases under the same condition when the generally-used HFC410A refrigerant was used and when a refrigerant such as HFO1234yf employed in the present invention was used is HFO1234yf:HFC410A≒ 1:1.7. Accordingly, when HFO1234yf is used as the refrigerant, it is necessary to flow it at a flow rate about 1.7 times greater than that of HFC410A. Because of this, unless the opening area of the discharge port 38 is set greater than that of a discharge port designed for use with HFC410A, a pressure loss occurs due to too small an opening area. However, if the opening area is increased unnecessarily, a dead volume increases and the performance of the rotary compressor reduces. It is accordingly necessary for the opening area to have an optimum size. Various experiments conducted so far reveal that if the total opening area of the discharge port 38 for HFO1234yf is about 1.01 to 1.70 times greater than that of the discharge port for HFC410A, the loss can be reduced and, at the same time, decomposition of the refrigerant can be restrained, thus making it possible to provide a highly-efficient and highly-reliable rotary compressor.

Fig. 4 is a characteristic table indicating global warming potentials of two-component mixture refrigerants comprising tetrafluoropropene and difluoromethane at varying mixture ratios. A refrigerant comprising only tetrafluoropropene has an excellent GWP value of 4. However, this refrigerant has a large specific volume and a refrigerating capacity thereof is accordingly small compared with a mixture refrigerant made up of this refrigerant and hydrofluorocarbon and, hence, larger refrigerating cycle equipment is required. In other words, a mixture refrigerant containing a main component of hydrofluoroolefin having a carbon-carbon double bond and hydrofluorocarbon having no double bonds mixed therewith is easy to use as a refrigerant because given characteristics such as, for example, the refrigerating capacity are improved compared with the single-component refrigerant of hydrofluoroolefin. Accordingly, in the case of refrigerants, including the single-component refrigerant, filled in a refrigerating cycle, a percentage of tetrafluoropropene may be appropriately selected depending on objectives of, for example, refrigerating cycle equipment having a compressor incorporated therein or conditions such as, for example, a limitation of GWP referred to above.

Specifically, as shown in Fig. 4, in order to make the global warming potential less than or equal to a GWP of 150, it is necessary to mix 20 wt% or less of difluoromethane with tetrafluoropropene, and in order to make the global warming potential less than or equal to a GWP of 300, it is necessary to mix 40 wt% or less of difluoromethane with tetrafluoropropene. That is, when a mixture ratio of HFO1234yf to R32 is 8:2, a GWP of 150 or less is satisfied and, at this time, a density ratio of an inhaled gas is HFO1234yf:HFC410A≒ 1:1.4. Accordingly, in applications where HFO1234yf and R32 are both used as a refrigerant, the refrigerant flows at a flow rate about 1.4 times greater than that of HFC410A. This means that the total opening area of the discharge port 38 suited for use with HFO1234yf is about 1.01 to 1.4 times greater than that of the discharge port suited for use with HFC410A, thereby making it possible to restrain the influence on the global environment, reduce the loss and restrain decomposition of the refrigerant. Thus, a highly-efficient and highly-reliable rotary compressor can be provided.

Also, when a mixture refrigerant of HFO1234yf and R32 was used at a mixture ratio of 6:4, the GWP could be reduced to a minimum while maintaining the same performance as a traditional year-round energy efficiency in terms of the efficiency including, for example, the pressure loss as required for refrigerating cycle equipment. The density ratio of the inhaled gases at this time was HFO1234yf:HFC410A≒ 1:1.2. Accordingly, in applications where HFO1234yf and R32 are both used as a refrigerant, the refrigerant flows at a flow rate about 1.2 times greater than that of HFC410A. This means that the total opening area of the discharge port 38 suited for use with HFO1234yf is about 1.01 to 1.2 times greater than that of the discharge port suited for use with HFC410A, thereby making it possible to restrain an environmental load, reduce the loss and restrain decomposition of the refrigerant. Thus, a highly-efficient and highly-reliable rotary compressor can be provided.

Further, even if part of the refrigerant that cannot be collected is vented to atmosphere, the influence of the refrigerant on global warming can be minimized. In addition, the mixture refrigerant having the aforementioned mixture ratio can reduce a temperature difference in spite of being a zeotropic mixture refrigerant and because it resembles a pseudo azeotropic mixture refrigerant in behavior, it can improve a cooling performance or a coefficient of cooling performance (COP) of the refrigerating appliance.

A consideration of the increase in flow rate is not limited to the discharge port 38 and should be also paid to all the pressure-loss generating portions and, hence, it is desired that a total sectional area of all the pressure-loss generating portions be determined depending on the density of the refrigerant. Based on this design guide, a simple design change allows a conventionally-used rotary compressor to be used with a different refrigerant.

Although in the above-described embodiment a refrigerant mainly comprising hydrofluoroolefin having a carbon-carbon double bond is used alone or in combination with another refrigerant as a refrigerant, a refrigerant mainly comprising hydrofluoroolefin having a carbon-carbon double bond and mixed with hydrofluorocarbon having no double bonds may be used as a refrigerant.

Also, a mixture refrigerant comprising tetrafluoropropene (HFO1234yf or HFO1234ze) as a hydrofluoroolefin and difluoromethane (HFC32) as a hydrofluorocarbon may be used as a refrigerant.

Further, a mixture refrigerant comprising tetrafluoropropene (HFO1234yf) as a hydrofluoroolefin and pentafluoroethane (HFC125) as a hydrofluorocarbon may be used as a refrigerant.

A three-component mixture refrigerant comprising tetrafluoropropene (HFO1234yf) as a hydrofluoroolefin and of pentafluoroethane (HFC125) and difluoromethane (HFC32) as hydrofluorocarbons may be used as a refrigerant.

In each case, the use of a two- or three-component refrigerant is preferable in which two or three components are mixed so as to make the global warming potential greater than or equal to 5 and less than or equal to 750, preferably less than or equal to 350.

As a refrigerant oil for use with the above-described refrigerants, the use of a synthetic oil mainly comprising an oxygenated compound such as, for example, polyoxyalkylene glycols, polyvinyl ethers, copolymers of poly(oxy)alkylene glycol or mono ether thereof and polyvinyl ether, polyol esthers, and polycarbonates is preferred. The use of a synthetic oil mainly comprising one of alkyl benzenes and alpha olefins is also preferred.

### (Embodiment 2)

Fig. 5 is a sectional view of a compression mechanism 3 according to a first embodiment of the present invention. The first embodiment differs from the embodiment according to Figs. 1 and 2 in the following points and is basically the same as the first embodiment in other points. Accordingly, duplicative explanation is omitted and only different portions are explained. This applies to other embodiments explained later.

As shown in Fig. 5, an upper end plate 34 and a lower end plate 35 have a discharge port 38 and a lower discharge port 35a, respectively. The discharge port 38 and the lower discharge port 35a are positioned symmetrically. That is, an angle of rotation of a crankshaft 31 when a compression chamber 39 communicates with the discharge port 38 and that of the crankshaft 31 when the compression chamber 39 communicates with the lower discharge port 35a are the same. A total opening area is a sum of an opening area of the discharge port 38 in the upper end plate 34 and that of the lower discharge port 35a in the lower end plate 35 and is determined depending on a density of a refrigerant.

Rather than providing only one discharge port 38 of a shape corresponding to the density of the refrigerant, the separate provision of the discharge port 38 and the lower discharge port 35a in the upper and lower end plates 34, 35 can reduce the opening area of each of them, thus making it possible to reduce a dead volume while maintaining a required total opening area of the discharge port 38 and the lower discharge port 35a. Also, because the refrigerant is discharged from the upper end plate 34 and the lower end plate 35 at the same angle of rotation of the crankshaft 3, the dead volume can be further reduced, thereby further enhancing the reliability and efficiency.

The separate provision of the discharge port 38 and the lower discharge port 35a is not limited to a combination of the upper and lower end plates 34, 35. Similar effects can be obtained by separately forming a plurality of discharge ports in the upper end plate 34 and a cylinder 30, in the cylinder and the lower end plate 35, or in the upper and lower end plates 34, 35 and the cylinder 30.

### (Embodiment 3)

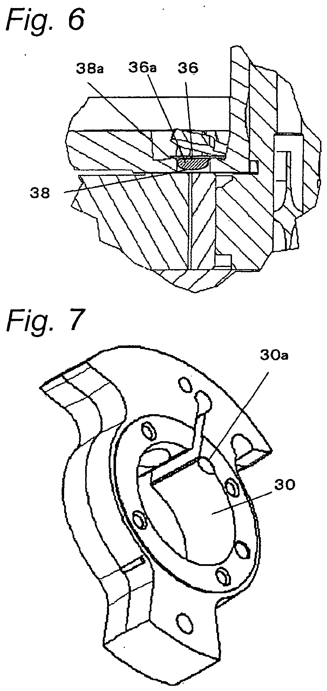

Fig. 6 is an enlarged view of a discharge port 38 and its surroundings according to a second embodiment of the present invention. As shown in Fig. 6, an upper end plate 34 has a ridge 38a formed therewith on an opposite side of a compression chamber 39 so as to confront a discharge valve 36 so that the discharge valve 36 may be held in line contact with the ridge 38a. The line contact increases a pressure of the discharge valve 36 to the ridge 38a to enhance a sealing performance, thus making it possible to prevent leakage from the discharge valve 36, restrain re-expansion of a refrigerant, and reduce a rise in discharge temperature. Accordingly, decomposition of the refrigerant can be reduced.

Also, the discharge valve 36 has a convex portion 36a formed therewith or secured thereto, which is accommodated within the discharge port 38 when the discharge valve 36 is closed. This configuration can reduce a dead volume in the compression chamber 39, prevent an excessive compression or re-expansion of a refrigerant, and reduce a rise in discharge temperature. Accordingly, decomposition of the refrigerant can be reduced.

### (Embodiment 4)

Fig. 7 is a perspective view of a cylinder 30 according to a third embodiment of the present invention. As shown in Fig. 7, the cylinder 30 has a cutout 30a defined therein on a side of a discharge port 38 in an upper end plate 34. The cutout 30a has a shape corresponding to a sectional shape of the discharge port 38 on a side of the compression chamber 39. This configuration does not block a refrigerant flow from the compression chamber 39 to the discharge port 38, thus making it possible to prevent an excessive compression or re-expansion of a refrigerant, reduce a rise in discharge temperature, and also reduce decomposition of the refrigerant.

Also, if the sectional shape of the discharge port 38 is formed into a cylindrical form, the refrigerant flow is not blocked and, hence, no pressure loss occurs and the excessive compression is unlikely to occur, thus making it possible to provide a highly-efficient and highly-reliable rotary compressor. Further, because the discharge port 38 can be formed by a simple through-hole, not only can workability be improved, but a machining time can be also reduced.

### (Embodiment 5)

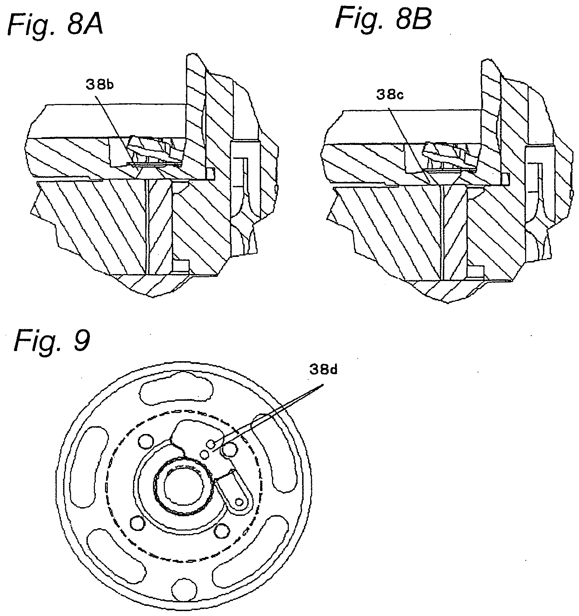

Fig. 8A is a detailed view of an upper end plate 34 and a discharge port 38b according to a fourth embodiment of the present invention. As shown in Fig. 8A, the discharge port 38b has a tapered cross-section, which can reduce a volume of the discharge port 38b while maintaining a required opening area on a side of a compression chamber 39, thus making it possible to reduce a dead volume, prevent an excessive compression or re-expansion of a refrigerant, and reduce a rise in discharge temperature. Accordingly, decomposition of the refrigerant can be reduced.

The tapered cross-section may be as shown in Fig. 8B, in which a discharge port 38c has a smaller opening area on a side of a compression chamber 39 than on a side of a discharge valve 36. This configuration allows the discharge port 38c to be positioned in a narrow range of angles of rotation of a crankshaft 31 when the compression chamber 39 communicates with the discharge port 38c, thus resulting in a reduction in dead volume. Also, because the opening area of the discharge port 38c is larger on the side opposite the compression chamber 39, a refrigerant flows smoothly, thus making it possible to prevent an excessive compression of the refrigerant.

### (Embodiment 6)

Fig. 9 is a top plan view of an upper end plate 34 and discharge ports 38c according to a fifth embodiment of the present invention. As shown in Fig. 9, the upper end plate 34 may have a plurality of discharge ports 38c defined therein at different positions thereof, which collectively ensure a required opening area even if it is difficult for only one discharge port 38d to have an opening area appropriate to a density ratio. Also, because the same machining can be applied to the plurality of discharge ports 38c, workability is enhanced, thus resulting in an increase in productivity. Further, because the plurality of discharge ports 38c can be positioned in a narrow range of angles of rotation of a crankshaft 31 when a compression chamber 39 communicates with the discharge ports 38d, a dead volume can be reduced, thus resulting in an efficient rotary compressor. Such a configuration is not limited to the upper end plate 34.

It is to be noted that although the above-described embodiments have been explained taking a rotary compressor, the present invention is naturally applicable to a scroll compressor that is one of the rotary compressors.

### Industrial Applicability

As described above, even if a refrigerant mainly comprising hydrofluoroolefin having a carbon-carbon double bond is used alone or in combination with another refrigerant as a refrigerant, a rotary compressor according to the present invention is highly efficient and highly reliable. Accordingly, the rotary compressor according to the present invention can be incorporated in air conditioners, heat pump water heaters, refrigerator-freezers, dehumidifiers or the like.

### Explanation of reference numerals

- 1: closed container
- 2: electric motor
- 3: compression mechanism
- 5: upper shell
- 26: air gap
- 28: groove
- 30: cylinder
- 30a: cutout
- 31: crankshaft
- 31a: eccentric portion
- 32: roller
- 33: vane
- 34: upper end plate
- 35: lower end plate
- 36: discharge valve
- 36a: convex portion
- 37: cup-shaped muffler
- 38: discharge port
- 38a: ridge
- 39: compression chamber
- 40: suction port
- 51: refrigerant discharge pipe

## Claims

1. A rotary compressor containing, as a refrigerant, a single-component refrigerant comprising hydrofluoroolefin having a carbon-carbon double bond or a mixture refrigerant comprising the hydrofluoroolefin having a carbon-carbon double bond and hydrofluorocarbon having no double bond, the rotary compressor comprising:
a compression mechanism (3) having a compression chamber (39) inhaling the refrigerant to increase a pressure thereof and discharge ports (38) discharging the refrigerant, the pressure of which has been increased in the compression chamber (39); and
discharge valves (36) incorporated in the compression mechanism (3), each of the discharge valves (36) having a distal end portion to cover the discharge port (38), **characterized in that**
the compression mechanism (3) comprises: a suction port (40) inhaling the refrigerant, a cylinder (30) having an internal space that communicates with the suction port (40) to compress the refrigerant inhaled through the suction port (40), and an upper end plate (34) and a lower end plate (35) for closing opposite ends of the cylinder (30) to define the compression chamber (39),
the discharge port (38) is formed in each of the upper end plate (34) and the lower end plate (35), and
a total opening area of the discharge ports (38) is determined depending on a density of the refrigerant, and the discharge port (38) in the upper plate and the discharge port (38) in the lower plate discharge the refrigerant at the same angle of rotation of a crankshaft (31).

2. The rotary compressor according to claim 1, wherein a ridge (38a) is formed around the discharge port (38) or on the discharge valve (36) to bring the discharge valve (36) into line contact with the discharge port (38).

3. The rotary compressor according to claim 1 or 2, wherein the discharge valve (36) has a convex portion (36a) accommodated within the discharge port (38).

4. The rotary compressor according to any one of claims 1 to 3, wherein the cylinder (30) has a cutout (30a) defined therein so as to have a shape corresponding to a sectional shape of the discharge port (38) on a contact surface with the discharge port (38), the cutout (30a) having a sectional shape that gradually reduces in an opposite direction from the contact face with the discharge port (38).

5. The rotary compressor according to any one of claims 1 to 4, wherein the discharge port (38) is formed into a cylindrical form,

6. The rotary compressor according to any one of claims 1 to 5, wherein the discharge port (38) is formed into a tapered form.

7. The rotary compressor according to any one of claims 1 to 6, wherein a plurality of discharge ports (38) are provided.

8. The rotary compressor according to any one of claims 1 to 7, wherein the total opening area of the discharge port (38) is 1.01 to 1.70 times greater than when R410A is used as the refrigerant.

9. The rotary compressor according to any one of claims 1 to 8, wherein a single-component refrigerant comprises tetrafluoropropene or trifluoropropene as the hydrofluoroolefin and the mixture refrigerant is a two- or three-component mixture refrigerant comprising tetrafluoropropene or trifluoropropene as the hydrofluoroolefin as a main component, so as to make global warming potential greater than or equal to 5 and less than or equal to 750, preferably less than or equal to 350.

10. The rotary compressor according to any one of claims 1 to 9, wherein a mixture refrigerant is a two- or three-component mixture refrigerant comprising tetrafluoropropene or trifluoropropene as the hydrofluoroolefin as a main component, and difluoromethane and pentafluoroethane so as to make global warming potential greater than or equal to 5 and less than or equal to 750, preferably less than or equal to 350.

11. The rotary compressor according to any one of claims 1 to 10, wherein a refrigerant oil is a synthetic oil comprising an oxygenated compound as a main component which includes one of polyoxyalkylene glycols, polyvinyl ethers, copolymers of poly(oxy)alkylene glycol or mono ether thereof and polyvinyl ether, polyol esthers, and polycarbonates or a synthetic oil comprising one of alkyl benzenes and alpha olefins as a main component.

12. The rotary compressor according to any one of claims 1 to 11, wherein a mixture refrigerant comprises tetrafluoropropene (HFO1234yf) as the hydrofluoroolefin and difluoromethane (HFC32) as the hydrofluorocarbon, and 80% of the tetrafluoropropene (HFO1234yf) is mixed with 20% of the difluoromethane (HFC32), and
wherein the total opening area of the discharge port (38) is 1.01 to 1.4 times greater than when R410A is used as the refrigerant.

## Patentansprüche

1. Rotationsverdichter, der als Kältemittel ein Einkomponenten-Kältemittel, das Hydrofluorolefin mit einer Kohlenstoff-Kohlenstoff-Doppelbindung umfasst, oder ein Gemischkältemittel enthält, das das Hydrofluorolefin mit einer Kohlenstoff-Kohlenstoff-Doppelbindung und Hydrofluorcarbonat ohne Doppelbindung umfasst, wobei der Rotationsverdichter umfasst:
eine Verdichtungseinrichtung (3) mit einer Verdichtungskammer (39), die das Kältemittel ansaugt, um dessen Druck zu erhöhen, und Auslassöffnungen (38), die das Kältemittel abgeben, dessen Druck in der Verdichtungskammer (39) erhöht wurde; und
Auslassventile (36), die in der Verdichtungseinrichtung (3) eingebaut sind, wobei jedes der Auslassventile (36) einen distalen Endabschnitt zum Abdecken der Auslassöffnung (38) aufweist,
**dadurch gekennzeichnet, dass**
die Verdichtungseinrichtung (3) umfasst: eine Ansaugöffnung (40), die das Kältemittel ansaugt, einen Zylinder (30) mit einem Innenraum, der mit der Ansaugöffnung (40) in Verbindung steht, um das durch die Ansaugöffnung (40) angesaugte Kältemittel zu verdichten, sowie eine obere Endplatte (34) und eine untere Endplatte (35) zum Verschließen entgegengesetzter Enden des Zylinders (30), um die Verdichtungskammer (39) zu definieren,
die Auslassöffnung (38) in sowohl der oberen Endplatte (34) als auch der unteren Endplatte (35) ausgebildet ist, und
eine Gesamtöffnungsfläche der Auslassöffnungen (38) in Abhängigkeit von einer Dichte des Kältemittels festgelegt ist, wobei die Auslassöffnung (38) in der oberen Platte und die Auslassöffnung (38) in der unteren Platte das Kältemittel bei dem gleichen Drehwinkel einer Kurbelwelle (31) abgeben.

2. Rotationsverdichter nach Anspruch 1, wobei eine Rippe (38a) um die Auslassöffnung (38) oder an dem Auslassventil (36) ausgebildet ist, um das Auslassventil (36) mit der Auslassöffnung (38) in Linienkontakt zu bringen.

3. Rotationsverdichter nach Anspruch 1 oder 2, wobei das Auslassventil (36) einen konvexen Abschnitt (36a) aufweist, der in der Auslassöffnung (38) aufgenommen ist.

4. Rotationsverdichter nach einem der Ansprüche 1 bis 3, wobei der Zylinder (30) eine Ausnehmung (30a) aufweist, die darin mit einer Form definiert ist, die an einer Kontaktfläche mit der Auslassöffnung (38) einer Querschnittsform der Auslassöffnung (38) entspricht, wobei die Ausnehmung (30a) eine Querschnittsform aufweist, die ausgehend von der Kontaktfläche mit der Auslassöffnung (38) in einer entgegengesetzten Richtung allmählich abnimmt.

5. Rotationsverdichter nach einem der Ansprüche 1 bis 4, wobei die Auslassöffnung (38) in einer zylindrischen Form ausgebildet ist.

6. Rotationsverdichter nach einem der Ansprüche 1 bis 5, wobei die Auslassöffnung (38) in einer konischen Form ausgebildet ist.

7. Rotationsverdichter nach einem der Ansprüche 1 bis 6, wobei mehrere Auslassöffnungen (38) vorgesehen sind.

8. Rotationsverdichter nach einem der Ansprüche 1 bis 7, wobei die Gesamtöffnungsfläche der Auslassöffnung (38) 1,01 bis 1,70 mal größer ist als bei Verwendung von R410A als Kältemittel.

9. Rotationsverdichter nach einem der Ansprüche 1 bis 8, wobei ein Einkomponenten-Kältemittel Tetrafluorpropen oder Trifluorpropen als Hydrofluorolefin umfasst und das Gemischkältemittel ein Zwei- oder Dreikomponenten-Gemischkältemittel ist, das als Hauptkomponente Tetrafluorpropen oder Trifluorpropen als Hydrofluorolefin umfasst, um das Treibhauspotenzial größer oder gleich 5 und kleiner oder gleich 750, vorzugsweise kleiner oder gleich 350, zu machen.

10. Rotationsverdichter nach einem der Ansprüche 1 bis 9, wobei ein Gemischkältemittel ein Zwei- oder Dreikomponenten-Gemischkältemittel ist, das als Hauptkomponente Tetrafluorpropen oder Trifluorpropen als Hydrofluorolefin, sowie Difluormethan und Pentafluorethan umfasst, um das Treibhauspotenzial größer oder gleich 5 und kleiner oder gleich 750, vorzugsweise kleiner oder gleich 350, zu machen.

11. Rotationsverdichter nach einem der Ansprüche 1 bis 10, wobei ein Kältemittelöl ein synthetisches Öl ist, das als Hauptkomponente eine sauerstoffhaltige Zusammensetzung umfasst, die Polyoxyalkylenglykole oder Polyvinylether oder Copolymere von Poly(oxy)alkylenglykol oder Monoether davon oder Polyvinylether oder Polyolester oder Polycarbonate enthält, oder ein synthetisches Öl ist, das als Hauptkomponente Alkylbenzole oder Alpha-Olefine umfasst.

12. Rotationsverdichter nach einem der Ansprüche 1 bis 11, wobei ein Gemischkältemittel Tetrafluorpropen (HFO1234yf) als Hydrofluorolefin und Difluormethan (HFC32) als Hydrofluorcarbonat umfasst, wobei 80% an Tetrafluorpropen (HFO1234yf) mit 20% an Difluormethan (HFC32) gemischt ist, und
wobei die Gesamtöffnungsfläche der Auslassöffnung (38) 1,01 bis 1,4 mal größer ist als bei Verwendung von R410A als Kältemittel.

## Revendications

1. Compresseur rotatif contenant, en tant que réfrigérant, un réfrigérant à un seul constituant, comprenant une hydrofluorooléfine possédant une double liaison carbone-carbone ou un réfrigérant en mélange comprenant l'hydrofluorooléfine possédant une double liaison carbone-carbone et un hydrofluorocarbure ne possédant pas de double liaison, le compresseur rotatif comprenant:
un mécanisme de compression (3) possédant une chambre de compression (39) aspirant le réfrigérant pour augmenter une pression de celui-ci et des orifices de refoulement (38) refoulant le réfrigérant dont la pression a été augmentée dans la chambre de compression (39); et
des soupapes de refoulement (36) incorporées dans le mécanisme de compression (3), chacune des soupapes de refoulement (36) possédant une partie d'extrémité distale pour recouvrir l'orifice de refoulement (38),
**caractérisé en ce que**
le mécanisme de compression (3) comprend: un orifice d'aspiration (40) aspirant le réfrigérant, un cylindre (30) possédant un espace interne qui communique avec l'orifice d'aspiration (40) pour comprimer le réfrigérant aspiré à travers l'orifice d'aspiration (40) et une plaque d'extrémité supérieure (34) et une plaque d'extrémité inférieure (35) pour fermer les extrémités opposées du cylindre (30) pour définir la chambre de compression (39),
l'orifice de refoulement (38) est formé dans chacune parmi la plaque d'extrémité supérieure (34) et la plaque d'extrémité inférieure (35) et
une aire d'ouverture totale des orifices de refoulement (38) est déterminée en fonction d'une densité du réfrigérant et l'orifice de refoulement (38) dans la plaque supérieure et l'orifice de refoulement (38) dans la plaque inférieure refoulent le réfrigérant au même angle de rotation d'un vilebrequin (31).

2. Compresseur rotatif selon la revendication 1, dans lequel une arête (38a) est formée autour de l'orifice de refoulement (38) ou sur la soupape de refoulement (36) pour amener la soupape de refoulement (36) en contact linéaire avec l'orifice de refoulement (38).

3. Compresseur rotatif selon la revendication 1 ou 2, dans lequel la soupape de refoulement (36) possède une partie convexe (36a) logée à l'intérieur de l'orifice de refoulement (38).

4. Compresseur rotatif selon l'une quelconque des revendications 1 à 3, dans lequel le cylindre (30) présente une découpe (30a) définie en son sein de manière à posséder une forme correspondant à une forme de section de l'orifice de refoulement (38) sur une surface de contact avec l'orifice de refoulement (38), la découpe (30a) possédant une forme de section qui diminue progressivement dans une direction opposée depuis la face de contact avec l'orifice de refoulement (38).

5. Compresseur rotatif selon l'une quelconque des revendications 1 à 4, dans lequel l'orifice de refoulement (38) est formé en une forme cylindrique.

6. Compresseur rotatif selon l'une quelconque des revendications 1 à 5, dans lequel l'orifice de refoulement (38) est formé en une forme effilée.

7. Compresseur rotatif selon l'une quelconque des revendications 1 à 6, dans lequel une pluralité d'orifices de refoulement (38) est prévue.

8. Compresseur rotatif selon l'une quelconque des revendications 1 à 7, dans lequel l'aire d'ouverture totale de l'orifice de refoulement (38) est 1,01 à 1,70 fois plus grande que lorsque du R410A est utilisé en tant que réfrigérant.

9. Compresseur rotatif selon l'une quelconque des revendications 1 à 8, dans lequel un réfrigérant à constituant unique comprend du tétrafluoropropène ou du trifluoropropène en tant qu'hydrofluorooléfine et le réfrigérant en mélange est un réfrigérant en mélange à deux ou trois constituants comprenant en tant que constituant principal du tétrafluoropropène ou du trifluoropropène en tant qu'hydrofluorooléfine, de manière à rendre un potentiel de réchauffement global supérieur ou égal à 5 et inférieur ou égal à 750, de préférence inférieur ou égal à 350.

10. Compresseur rotatif selon l'une quelconque des revendications 1 à 9, dans lequel un réfrigérant en mélange est un réfrigérant en mélange à deux ou trois constituants comprenant en tant que constituant principal du tétrafluoropropène ou du trifluoropropène en tant qu'hydrofluorooléfine et du difluorométhane et du pentafluoroéthane de manière à rendre le potentiel de réchauffement global supérieur ou égal à 5 et inférieur ou égal à 750, de préférence inférieur ou égal à 350.

11. Compresseur rotatif selon l'une quelconque des revendications 1 à 10, dans lequel une huile réfrigérante est une huile synthétique comprenant un composé oxygéné en tant que constituant principal, qui comprend l'un parmi les polyoxyalkylèneglycols, les polyvinyléthers, les copolymères de poly(oxy)alkylèneglycol ou de monoéthers de celui-ci et de polyvinyléther, les polyoléthers et les polycarbonates ou une huile synthétique comprenant l'un parmi les alkylbenzènes et les alpha-oléfines en tant que constituant principal.

12. Compresseur rotatif selon l'une quelconque des revendications 1 à 11, dans lequel un réfrigérant en mélange comprend du tétrafluoropropène (HFO1234yf) en tant qu'hydrofluorooléfine et du difluorométhane (HFC32) en tant qu'hydrofluorocarbure et 80 % du tétrafluoropropène (HFO1234yf) est mélangé à 20 % du difluorométhane (HFC32), et
dans lequel l'aire d'ouverture totale de l'orifice de refoulement (38) est 1,01 à 1,4 fois plus grande que lorsque du R410A est utilisé en tant que réfrigérant.
